# NEUE EUROPÄISCHE PATENTSCHRIFT

(11) **EP 1 406 361 B3**
(45) Veröffentlichungstag dieser Patentschrift: **10.11.2010**
(45) Hinweis auf die Patenterteilung: 24.06.2009
(21) Anmeldenummer: 03019961.6
(22) Anmeldetag: 03.09.2003
(51) Int. Cl.: H02G 3/12

(54) **Montageelement für Geräteeinbaukanäle**
Mounting element for flush apparatus in raceways
Elément de montage pour appareils à affleurement dans des canalisations .

(30) Priorität: 05.10.2002 DE 20215340 U
(43) Veröffentlichungstag der Anmeldung: 07.04.2004
(73) Patentinhaber: Tehalit GmbH, 67716 Heltersberg (DE); TELEGÄRTNER KARL GÄRTNER GMBH, 71144 Steinenbronn (DE)
(72) Erfinder: Schmitt, Erwin, 67659 Kaiserslautern (DE); Schneckmann, Horst, 67705 Trippstadt (DE); Kauf, Peter, 66482 Zweibrücken (DE); Schneider, Michael, 66851 Horbach (DE); Philipp, Gerd, 71034 Böblingen (DE)
(74) Vertreter: Patentanwälte Möll, Bitterich & Dr. Keller

(56) Entgegenhaltungen:
- GB-A- 2 282 278
- US-A- 5 013 870

## Beschreibung

Die Erfindung betrifft Montageelemente für Geräteeinbaukanäle gemäß dem Oberbegriff des Anspruchs 1.

Aus der DE 25 39 299 A ist eine Geräteeinbaudose für Installationskanäle bekannt, die eine Vorrichtung zur lösbaren Befestigung der Dose an der C-Schiene eines Geräteeinbaukanals besitzt. Die Befestigungsvorrichtung besteht aus mindestens einem Paar sich gegenüberstehender federnder Rastnasen. Diese Rastnasen besitzen nicht nur jeweils eine keilförmige Einführschräge, sondern eine ebenso keilförmige Wirkschräge. Da aufgrund dieser Wirkschräge die Verankerung der Dose am Geräteeinbaukanal nicht sicher ist, befindet sich zwischen jedem Paar von Haltenasen ein vom Inneren der Dose aus betätigbarer Keil, der im Montagezustand die Rastnasen gegeneinander verspreizt. Trotzdem ist diese Befestigung nicht ausreichend sicher.

Darüber hinaus wurde eine Vielzahl weiterer Befestigungseinrichtungen entwickelt. Man vergleiche beispielsweise DE 77 28 373 U, GB 20 65 988 A, EP 757 419 B oder DE 33 05 602 A. Allen diesen Befestigungsvorrichtungen ist gemeinsam, dass das Verriegeln und Entriegeln mittels Drehbewegung erfolgt. Diese Vorrichtungen, die teilweise mit Schubkurbelgetrieben arbeiten, sind aufwändig.

In der US 5,013,870 wird ein Geräteeinbaukanal beschrieben, der aus einem Unterteil und einem Oberteil besteht sowie einem in den Gerätekanal integrierten Kasten. Der Kasten weist eine Unterseite und Seitenwände auf und wird über einen Hebel und Rasthaken mit an der Innenseite des Unterteils angeordneten Rastvorsprüngen verrastet. Die Rastvorsprünge des Unterteils sind starr. Das Aufsetzen des Kanalselements erfolgt durch ein seitliches Einschieben der Rasthaken in die Rastfüße des Kanalunterteils.

In der GB 2 282 278 wird ein Leitungsführungskanal beschrieben, bei dem ein Kanalstück auf das Kanalunterteil über Rastvorsprünge aufgerastet wird.

Allen vorbeschriebenen Verriegelungsvorrichtungen ist gemeinsam, dass die Vorrichtung sowohl zum Verriegeln als auch zum Entriegeln zugänglich sein muss. Dies hat entweder umständliche Montage- und Demontagevorgänge oder eine aufwändige konstruktive Lösung zur Folge.

Der vorliegenden Erfindung liegt die Aufgabe zugrunde, ein Montageelement für Geräteeinbaukanäle anzugeben, welches ohne Hilfsmittel und ohne Eingriff mit dem Geräteeinbaukanal sicherverrastet und mit Hilfe eines einfachen Hebelwerkzeuges, beispielsweise eines Schraubendrehers, wieder gelöst werden kann.

Diese Aufgabe wird gelöst durch ein Montageelement mit den Merkmalen des Anspruchs 1.

Der wesentliche Vorteil der vorliegenden Erfindung besteht darin, dass die Verrastung ausschließlich mit Hilfe von federnden Rasthaken erfolgt, die mit den Halteschienen am Bodenteil des Geräteeinbaukanals kooperieren. Diese Rasthaken lassen sich durch einfaches Aufdrücken des Montageelements auf die Halteschienen aktivieren. Dies gilt insbesondere dann, wenn die Rasthaken gemäß einer bevorzugten Ausgestaltung der Erfindung eine Einführschräge besitzen. Dadurch, dass die Rasthaken sich im montierten Zustand gegen das Bodenteil des Montageelements abstützen, sind sie im montierten Zustand blockiert, so dass das Montagelement auch hohen Abzugskräften problemlos standhält.

Gemäß einer bevorzugten Ausgestaltung der Erfindung sitzen die Rasthaken unter einer Durchbrechung im Bodenteil des Montagelements. Diese Durchbrechung ermöglicht es, zur Demontage des Montageelements die Rasthaken von oben mit Hilfe eines Hebels in Form eines Schraubendrehers oder dergleichen zu lösen.

Gemäß einer Ausgestaltung der Erfindung ist das Montageelement einstückig aus Kunststoff gespritzt. Auch in diesem Fall sind die Bodendurchbrechungen über den Rasthaken von Vorteil, weil sie die Herstellung des Montageelements in einfachen Spritzgussformen ohne bewegliche Schieber ermöglichen.

Anhand der Zeichnung soll die Erfindung in Form eines Ausführungsbeispiels näher erläutert werden. Es zeigen
Fig. 1 eine Draufsicht auf die Unterseite eines Montageelements und
Fig. 2 eine Seitenansicht des Montageelements der Fig. 1, montiert auf einem ausschnittsweise dargestellten Geräteeinbaukanal.

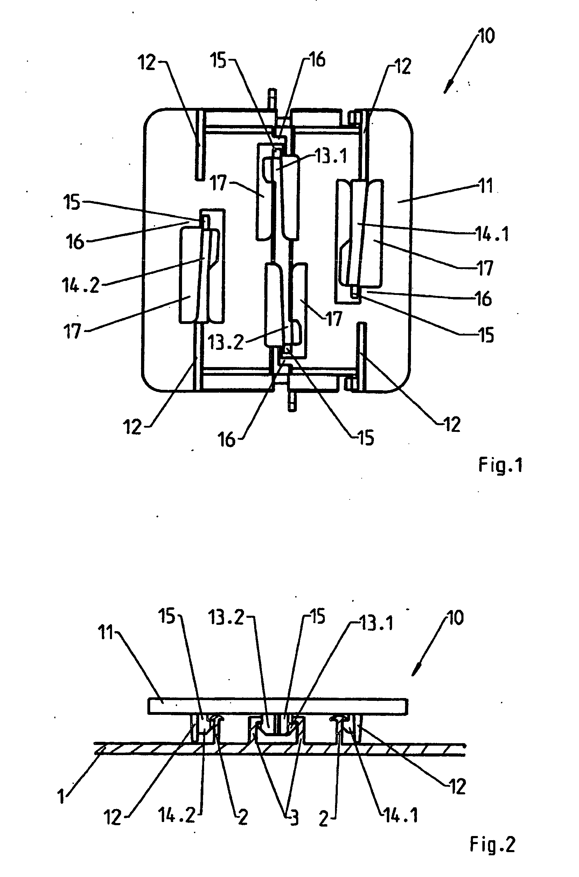

Fig. 1 als Draufsicht auf die Unterseite und Fig. 2 als Seitenansicht zeigen ein Montageelement 10, lösbar zu montieren an Halteschienen 2, 3 am Kanalboden 1 eines Geräteeinbaukanals. Das Montageelement 10 besitzt ein Bodenteil 11, an dessen Unterseite vier feste Füße 12 vorgesehen sind, mit deren Hilfe es sich auf dem Kanalboden 1 abstützt.

Des weiteren sind am Bodenteil 11 ein erstes Paar von Rasthaken 13.1, 13.2 vorgesehen, die mit der C-förmigen Halteschiene 3 kooperieren, sowie ein zweites Paar von federnden Rasthaken 14.1, 14.2, die mit T-förmigen Halteschienen 2 kooperieren.

Oberhalb der federnden Rasthaken 13.1, 13.2, 14.1, 14.2 erkennt man im Bodenteil 11 Durchbrechungen 17. Diese besitzen eine im wesentlichen rechteckige Grundform, wobei jedoch an einer Ecke 16 Bodenmaterial stehen bleibt. Die Rasthaken 13.1, 13.2, 14.1, 14.2 besitzen an ihrem freien Ende eine Stützleiste 15. Diese Stützleiste 15 schwenkt über die Ecken 16, sobald das Montageelement 10 im Geräteeinbaukanal verrastet ist. Dadurch stützt sich die Halteleiste 15 gegen das Bodenteil 11 bzw. im vorliegenden Ausführungsbeispiel gegen die Ecke 16 des Montageelements 10 ab, so dass die federnden Rasthaken 13.1, 13.2, 14.1, 14.2 auch hohen Abzugskräften standhalten.

im demontierten Zustand, wie er in Fig. 1 dargestellt ist, befinden sich die federnden Rasthaken 13.1, 13.2,14.1, 14.2 und ihre Halteleisten 15 ganz im Bereich der Bodendurchbrechung 17. Dies macht es möglich, das Montageelement 10 einstückig aus Kunststoff zu spritzen unter Verwendung einer einfachen Spritzgussform ohne bewegliche Schieber.

## Patentansprüche

1. Montageelement (10) für Geräteeinbaukanäle, die einen Boden (1) mit Halteschienen (2, 3) besitzen, mindestens umfassend
- ein Bodenteil (11),
- Füße (12) und federnde Rasthaken (13.1, 13.2, 14.1, 14.2), die mit den Halteschienen (2, 3) kooperieren,
**gekennzeichnet durch** die Merkmale:
- am Bodenteil (11) ist ein erstes Paar von Rasthaken (13.1, 13.2) vorgesehen, die mit einer C-förmigen Halteschiene (3) am Kanalboden (1) des Geräteeinbaukanals kooperieren, sowie
- ein zweites Paar von federnden Rasthaken (14.1, 14.2), die mit T-förmigen Halteschienen (2) kooperieren,
- die Rasthaken (13.1, 13.2, 14.1, 14.2) stützen sich im montierten Zustand gegen das Bodenteil (11) ab, im demontierten Zustand nicht, und lassen sich **durch** einfaches Aufdrücken des Montageelement auf die Halteschienen aktivieren.

## Claims

1. Mounting element (10) for apparatus installation ducts which have a base (1) with retaining rails (2,3), at least comprising
- a base part (11),
- feet (12) and resilient locking hooks (13.1,13.2,14.1,14.2) which co-operate with the retaining rails (2,3),
**characterised by** the features:
- a first pair of locking hooks (13.1,13.2) is provided on the base part (11), which co-operate with a C-shaped retaining rail (3) on the duct base (1) of the apparatus installation duct, and also
- a second pair of resilient locking hooks (14.1,14.2) which co-operate with T-shaped retaining rails (2),
- the locking hooks (13.1,13.2,14.1,14.2) are supported against the base part (11) in the mounted state but not in the demounted state, and can be activated by simply pushing the mounting element on to the retaining rails.

2. Mounting element according to Claim 1, **characterised by** the feature:
- the locking hooks (13.1,13.2,14.1,14.2) have a support strip (15) at their free end.

3. Mounting element according to Claim 1 or 2, **characterised by** the feature:
- the locking hooks (13.1,13.2,14.1,14.2) have a lead-in slope.

4. Mounting element according to Claim 1, 2 or 3, **characterised by** the feature:
- the locking hooks (13.1,13.2,14.1,14.2) are seated under a respective aperture (17) in the base part (11).

5. Mounting element according to any one of Claims 1 to 4, **characterised by** the feature:
- it is injection-moulded in one piece from plastics material.

## Revendications

1. Elément de montage (10) pour goulottes d'intégration d'appareils munies d'un fond (1) présentant des glissières de retenue (2, 3), comprenant au moins
- une partie de fond (11),
- des jambages (12) et des crochets élastiques d'encliquetage (13.1, 13.2, 14.1, 14.2) qui coopèrent avec les glissières de retenue (2, 3),
**caractérisé par** les caractéristiques suivantes :
- il est prévu, sur la partie de fond (11), une première paire de crochets d'encliquetage (13.1, 13.2) qui coopèrent avec une glissière de retenue (3) configurée en C, sur le fond (1) de la goulotte d'intégration d'appareils, ainsi
- qu'une seconde paire de crochets élastiques d'encliquetage (14.1, 14.2) qui coopèrent avec des glissières de retenue (2) configurées en T,
- les crochets d'encliquetage (13.1, 13.2, 14.1, 14.2) prennent appui contre la partie de fond (11) à l'état monté, mais pas à l'état démonté, et peuvent être activés par simple enfoncement de l'élément de montage sur les glissières de retenue.

2. Elément de montage selon la revendication 1,
**caractérisé par** la caractéristique suivante :
- les crochets d'encliquetage (13.1, 13.2, 14.1, 14.2) possèdent une barrette d'appui (15) à leur extrémité libre.

3. Elément de montage selon la revendication 1 ou 2,
**caractérisé par** la caractéristique suivante :
- les crochets d'encliquetage (13.1, 13.2, 14.1, 14.2) possèdent un biseau d'introduction.

4. Elément de montage selon la revendication 1, 2 ou 3,
**caractérisé par** la caractéristique suivante :
- les crochets d'encliquetage (13.1, 13.2, 14.1, 14.2) se trouvent au-dessous d'une discontinuité respective (17) pratiquée dans la partie de fond (11).

5. Elément de montage selon l'une des revendications 1 à 4,
**caractérisé par** la caractéristique suivante :
- il est fabriqué par injection d'un seul tenant de matière plastique.
